# EUROPÄISCHE PATENTSCHRIFT

(11) **EP 1 587 721 B1**
(45) Veröffentlichungstag und Bekanntmachung des Hinweises auf die Patenterteilung: **07.10.2009**
(21) Anmeldenummer: 04702633.1
(22) Anmeldetag: 16.01.2004
(51) Int. Cl.: B60S 1/04

(54) **SCHEIBENWISCHVORRICHTUNG, INSBESONDERE FÜR EIN KRAFTFAHRZEUG**
WINDSCREEN WIPER DEVICE, IN PARTICULAR FOR A MOTOR VEHICLE
DISPOSITIF ESSUIE-GLACE, EN PARTICULIER POUR UN VEHICULE AUTOMOBILE

(30) Priorität: 17.01.2003 DE 10301900
(43) Veröffentlichungstag der Anmeldung: 26.10.2005
(73) Patentinhaber: ROBERT BOSCH GMBH, 70442 Stuttgart (DE)
(72) Erfinder: ALBRECHT, Gerard, 67690 Hatten (FR); BOHN, Roland, 77815 Buehl (DE); SCHABANEL, Francois, 94100 Saint Maux des Fossés (FR); RITT, Jean-Marc, 67000 Strasbourg (FR)
(86) Internationale Anmeldenummer: PCT/DE2004/000049
(87) Internationale Veröffentlichungsnummer: WO 2004/065186

(56) Entgegenhaltungen:
- EP-A- 0 532 384
- WO-A-02/14123
- DE-A- 3 116 821
- DE-A- 10 062 617
- FR-A- 1 368 673

## Beschreibung

### Stand der Technik

Die Erfindung betrifft eine Scheibenwischvorrichtung, insbesondere für ein Kraftfahrzeug, nach Gattung der unabhängigen Ansprüche. Es sind schon zahlreiche Scheibenwischvorrichtungen für Kraftfahrzeuge bekannt, die ein Antriebselement aufweisen, das an der Karosserie des Kraftfahrzeugs befestigt ist. Typischerweise werden derartige Antriebselemente an der Karosserie festgeschraubt, was jedoch sehr aufwendig ist und viele Teile wie Schrauben, Schraubenmuttern und Unterlegscheiben usw. benötigt. Dies ist ogistisch aufwendig und darüber hinaus komplex beim Einbau. Weiterhin ist aus der DE 100 62 617 A1 eine Scheibenwischvorrichtung bekannt, die in das Kraftfahrzeug eingeklebt ist, wobei der Klebstoff dämpfende Eigenschaften aufweist.

Aus der WO-A-02/14123 ist eine Scheibenwischvorrichtung mit den Merkmalen des Oberbegriffs des Anspruchs 1 bekannt.

### Vorteile der Erfindung

Die erfindungsgemäße Scheibenwischvorrichtung mit den Merkmalen des Hauptanspruchs hat den Vorteil, dass durch zwei längliche, axial starr angeordnete Befestigungselemente, die in Aufnahmen des Kraftfahrzeugs eingreifen, die Anzahl der beweglichen Teile reduziert wird. Auf diese Weise ist eine kostengünstige und einfache Möglichkeit, das Antriebselement zu befestigen, gegeben.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist es, wenn das Befestigungselement zumindest ein Dämpfungselement als Entkopplungselement zur Dämpfung mechanischer Schwingungen aufweist, da auf diese Weise die Geräuschentwicklungen der Scheibenwischvorrichtung reduziert werden bzw. die Übertragung von Schwingungs- und Laufgeräuschen des Antriebselements auf die Karosserie des Kraftfahrzeugs verhindert wird.

Weiterhin ist es als vorteilhaft anzusehen, wenn das Antriebselement eine Abtriebswelle aufweist und die Befestigungselemente so angeordnet sind, dass das Antriebselement durch eine Drehung um eine zur Antriebswelle im Wesentlichen parallele Achse befestigbar ist. Auf diese Weise können mehrere Befestigungselemente in einem Arbeitsgang mit den Aufnahmen im Kraftfahrzeug in Eingriff gebracht werden. Dies spart Zeit in der Fertigung und verringert die Komplexität des Fertigungsschrittes.

Besonders vorteilhaft ist es hierbei, wenn die Befestigungselemente im Wesentlichen auf einem gemeinsamen Kreis angeordnet sind. Auf diese Weise ist es besonders einfach, das Antriebselement an der Karosserie anzusetzen und durch eine einfache Drehbewegung im Kraftfahrzeug zu befestigen.

Als Arretierungselement zur Fixierung des Antriebselementes kann vorteilhafterweise eine Aufnahme für eine Niet oder eine Schraube oder ein Clips vorgesehen sein. Insbesondere ist es vorteilhaft, wenn das Arretierungselement selbst als Clips ausgebildet ist.

In einer Variation ist es vorteilhaft, das Arretierungselement als Schweiß- oder Klebestelle auszubilden. Auf diese Weise kann beispielsweise mittels einer stoffschlüssigen Verbindung ein optimaler Halt der Antriebsvorrichtung im Kraftfahrzeug erzielt werden.

### Zeichnungen

Ausführungsbeispiele der Erfindung sind in den Zeichnungen dargestellt und in der nachfolgenden Beschreibung näher erläutert.

Es zeigen:
Figur 1 eine Antriebsvorrichtung einer erfindungsgemäßen Scheibenwischvorrichtung in einer schematischen Darstellung und
Figur 2 einen Schnitt durch eine Befestigungstelle einer Antriebsvorrichtung aus Figur 1.

### Beschreibung der Ausführungsbeispiele

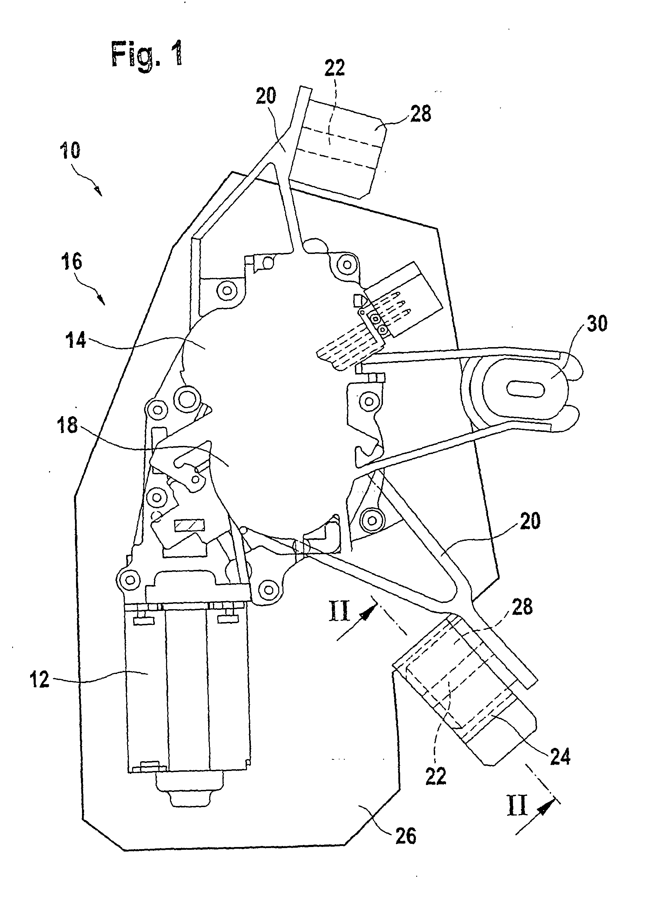

In Figur 1 ist eine Scheibenwischvorrichtung 10 eines Heckscheibenwischers eines Kraftfahrzeugs in einer schematischen Darstellung gezeigt. Natürlich ist die Erfindung in keiner Weise auf Heckscheibenwischer beschränkt und problemlos auf Frontscheibenwischer anwendbar. Die Scheibenwischvorrichtung 10 umfasst einen Elektromotor 12 mit einem Getriebe 14, die zusammen ein Antriebselement 16 bilden. Das Antriebselement 16 weist ein Gehäuse 18 auf, das teilweise aus gegossenem Material ist und von dem aus sich Befestigungsarme 20 radial erstrecken, an deren Ende jeweils ein Befestigungselement 22 angeordnet ist. Die Befestigungselemente 22 sind hier als quaderförmige Stäbe ausgebildet, die sich senkrecht zur radialen Richtung der Längserstreckung der Befestigungsarme 20 erstrecken. Natürlich können die Befestigungselemente auch anders ausgebildet sein. So sind beispielsweise auch zylidrische oder elliptische Befestigungselemente 22 denkbar. Weiterhin sind die Befestigungselemente 22 derart angeordnet, dass sie in ihrer Längserstreckung auf Tangenten eines Kreises liegen. Die Befestigungselemente 22 sind in taschenartige Aufnahmen 24 eingesteckt, die in die Karosserie 26 des Kraftfahrzeugs gebildet sind. Zur Schwingungsdämpfung sind in die Aufnahmen 24 Dämpfungselemente 28 eingesetzt.

Durch die tangentiale Anordnung der Befestigungselemente 22 kann das Antriebselement 16 durch eine Drehbewegung um eine, zur hier nicht gezeigten Abtriebswelle, parallele Achse verdreht werden. Fixiert wird das Antriebselement 16 durch ein Arretierungselement 30, welches durch eine maulartige Aufnahme für eine Schraube oder eine Niet als Arretierungselement 30 gebildet ist. Sinnvollerweise soll das Zentrum des Kreises, auf dessen Tangenten die Befestigungselemente 22 angeordnet sind, nicht im Bereich des Arretierungselementes 30 liegen.

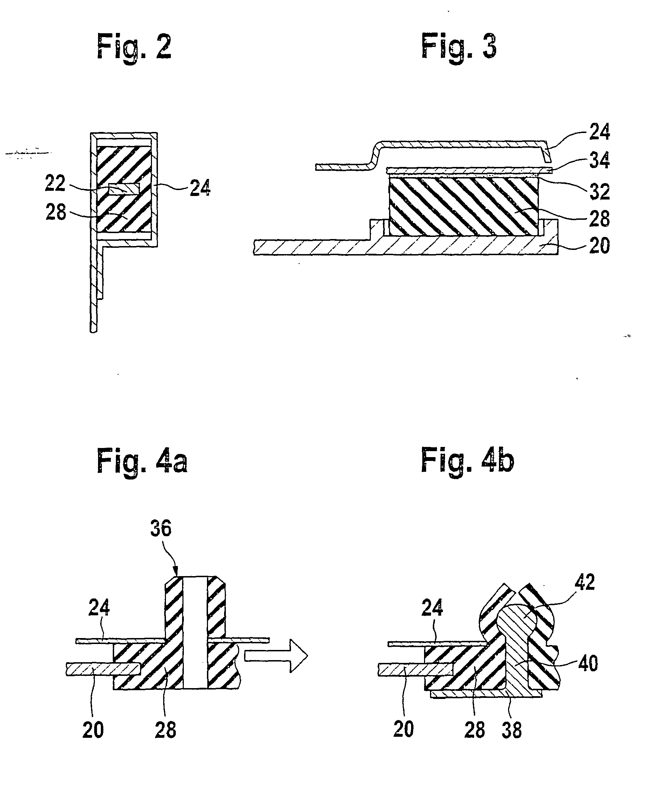

In Figur 2 ist ein Schnitt durch eine Aufnahme 24 mit dem Befestigungselement 22 und dem Dämpfungselement 28 gezeigt. Im Zentrum der Aufnahme 24 sitzt das quaderförmige Befestigungselement 22, welches vom Dämpfungselement 28 umschlossen ist. Die Aufnahme 24 ist als Tasche einstückig aus einer Blechlasche der Fahrzeugkarosserie ausgebildet und schlaufenartig gebogen. An der Zusammenführung der beiden Enden der Schlaufe sind diese zusammen geschweißt.

## Patentansprüche

1. Scheibenwischvorrichtung (10), insbesondere für ein Kraftfahrzeug, mit mindestens einem, am Kraftfahrzeug befestigbaren Antriebselement (16), wobei mindestens zwei, längliche, axial starr angeordnete Befesdgungselemente (22) vorgesehen sind die in Aufnahmen (24) des Kraftfahrzeugs einzugreifen vermögen, wobei das Antriebselement (16) eine Abtriebswelle (15) aufweist und, **dadurch gekennzeichnet, dass** die Befestigungselemente (22) derart angeordnet sind, dass das Antriebselement (16) durch eine Drehung um eine zur Abtriebswelle (15) parallele Achse befestigt ist.

2. Scheibenwischvorrichtung (10) nach Anspruch 1, **dadurch gekennzeichnet, dass** das Befestigungselement (22) zumindest ein Dämpfungselement (28) zur Dämpfung mechanischer Schwingungen aufweist. '

3. Scheibenwischvorrichtung (10), nach einem der vorhergehenden Ansprüche, **dadurch gekennzeichnet, dass** die Befestigungselemente (22) auf Tangenten eines gemeinsamen Kreises angeordnet sind.

4. Scheibenwischvorrichtung (10), nach einem der vorhergehenden Ansprüche, **dadurch gekennzeichnet, dass** ein Arretierungselement (30) zur Fixierung des Antriebselements (16) vorgesehen ist.

5. Scheibenwischvorrichtung (10), nach Anspruch 4, **dadurch gekennzeichnet, dass** das Arretierungselement (30) als Aufnahme für einen Niet, eine Schraube oder einen Clips ausgebildet ist oder selbst als Clips ausgebildet ist.

6. Scheibenwischvorrichtung (10), nach Anspruch 4, **dadurch gekennzeichnet, dass** das Arretierungselement (30) als Schweiß- oder Klebestelle ausgebildet ist.

## Claims

1. Windscreen wiper device (10), in particular for a motor vehicle, with at least one driving element (16) which can be fastened to the motor vehicle, wherein at least two elongate fastening elements (22) which are arranged in an axially rigid manner and can engage in receptacles (24) on the motor vehicle are provided, wherein the driving element (16) has an output shaft (15), **characterized in that** the fastening elements (22) are arranged in such a manner that the driving element (16) is fastened by rotation about an axis parallel to the output shaft (15).

2. Windscreen wiper device (10) according to Claim 1, **characterized in that** the fastening element (22) has at least one damping element (28) for damping mechanical vibrations.

3. Windscreen wiper device (10) according to one of the preceding claims, **characterized in that** the fastening elements (22) are arranged on tangents of a common circle.

4. Windscreen wiper device (10) according to one of the preceding claims, **characterized in that** a locking element (30) is provided for fixing the driving element (16).

5. Windscreen wiper device (10) according to Claim 4, **characterized in that** the locking element (30) is designed as a receptacle for a rivet, a screw or a clip or is itself designed as a clip.

6. Windscreen wiper device (10) according to Claim 4, **characterized in that** the locking element (30) is designed as a welding or adhesive bonding point.

## Revendications

1. Dispositif essuie-glace (10), en particulier pour un véhicule automobile, comprenant au moins un élément d'entraînement (16) pouvant être fixé sur le véhicule automobile, au moins deux éléments de fixation (22) allongés, disposés rigidement axialement étant prévus, lesquels peuvent venir en prise dans des logements (24) du véhicule automobile, l'élément d'entraînement (16) présentant un arbre de sortie (15) et **caractérisé en ce que** les éléments de fixation (22) sont disposés de telle sorte que l'élément d'entraînement (16) soit fixé par une rotation autour d'un axe parallèle à l'arbre de sortie (15).

2. Dispositif essuie-glace (10) selon la revendication 1, **caractérisé en ce que** l'élément de fixation (22) présente au moins un élément d'amortissement (28) pour l'amortissement des oscillations mécaniques.

3. Dispositif essuie-glace (10) selon l'une quelconque des revendications précédentes, **caractérisé en ce que** les éléments de fixation (22) sont disposés sur des tangentes d'un cercle commun.

4. Dispositif essuie-glace (10) selon l'une quelconque des revendications précédentes, **caractérisé en ce qu'**un élément de blocage (30) est prévu pour la fixation de l'élément d'entraînement (16).

5. Dispositif essuie-glace (10) selon la revendication 4, **caractérisé en ce que** l'élément de blocage (30) est réalisé sous forme de logement pour un rivet, une vis ou une pince, ou est réalisé lui-même sous forme de pince.

6. Dispositif essuie-glace (10) selon la revendication 4, **caractérisé en ce que** l'élément de blocage (30) est réalisé sous forme de point de soudure ou de colle.
